# FASCICULE DE BREVET EUROPEEN

(11) **EP 4 132 843 B1**
(45) Date de publication et mention de la délivrance du brevet: **08.05.2024**
(21) Numéro de dépôt: 21720567.3
(22) Date de dépôt: 01.04.2021
(51) Int. Cl.: B63B 1/14, B63B 75/00, F03B 13/20, F03D 9/00, B63B 21/50, B63B 35/44, F03D 13/25

(54) **STRUCTURE PORTEUSE D'INSTALLATION DE MODULES DE CAPTAGE D'ENERGIE EOLIENNE**
TRAGSTRUKTUR ZUR MONTAGE VON WINDENERGIEGEWINNUNGSMODULEN
SUPPORTING STRUCTURE FOR INSTALLING WIND ENERGY COLLECTION MODULES

(30) Priorité: 06.04.2020 FR 2003399
(43) Date de publication de la demande: 15.02.2023
(73) Titulaire: HYDREMANCHE, 50700 Valognes (FR)
(72) Inventeur: JUIN, Olivier, 50700 Valognes (FR)
(74) Mandataire: Cabinet Chaillot
(86) Numéro de dépôt international: PCT/IB2021/052731
(87) Numéro de publication internationale: WO 2021/205293

(56) Documents cités:
- EP-A1- 3 388 664
- WO-A1-2013/040871
- CN-A- 110 296 049
- FR-A1- 2 990 476
- FR-A1- 2 990 477
- GB-A- 2 378 679

## Description

La présente invention concerne une structure porteuse d'installation de modules de captage d'énergie éolienne.

Ce procédé s'applique notamment, mais non exclusivement, à l'installation de modules de captage d'énergie éolienne posés sur le sol onshore ou offshore ainsi qu'à l'installation de modules de captage d'énergie éolienne flottants.

D'une façon générale, les éoliennes onshores sont installées individuellement au moyen de fondations en béton armé très importantes, rendant difficile et onéreux le démantèlement en fin de vie.

Les éoliennes offshore posées sont installées individuellement au moyen soit d'une embase gravitaire de plusieurs milliers de tonnes (bucket, gravity) nécessitant un important travail de génie maritime sur le sol, soit d'un forage profond pour les installations dites « monopieux », soit d'une embase de type « jacket » elle-même fixée au moyen d'un forage à chaque pied. Or les forages sont connus pour leur coût élevé et leur impact désastreux sur l'environnement

Les éoliennes offshores flottantes sont installées individuellement au moyen de flotteurs et de lests très importants pour assurer leur verticalité et sont maintenues en position par des ancrages complexes.et donc coûteux eux aussi.

La présente invention réduit ces inconvénients en proposant l'emploi d'une structure porteuse de maintien commune à un ensemble des modules de captage d'énergie éolienne. Chaque module concourant à l'équilibre des modules adjacents soit par son poids, soit par sa flottabilité, le principe est de maintenir le positionnement de ces dits modules et garantir, lorsqu'elle est souhaitée, leur verticalité par une structure porteuse commune, globalement horizontale, articulée ou non. Les modules de captage d'énergie éolienne sont solidarisés au reste de la structure porteuse de manière fixe ou par l'intermédiaire de systèmes formant glissière, par exemple à patins ou à rouleaux. Des longrines, longerons ou le cas échéant des câbles, relient les modules entre eux, soit à des massifs intermédiaires ou périphériques dans le cas de modules posés, soit à des caissons flottants dans le cas de modules offshores flottants.

La recherche d'antériorité a ciblé les brevets concernant les éoliennes marines qui décrivent pour certains des structures permettant le transport sur site et l'installation en version flottante ou en version déposée sur le sol marin; ce cas de figure devrait être le plus pertinent pour imaginer une structure d'association desdites éoliennes marines permettant le transport et l'installation sur site d'une association de modules de captage d'énergie éolienne.

Les brevets analysés sont les suivants:
- WO 03089787 date de dépôt : 19/04/2002,
- WO 2006038091 date de dépôt : 04/10/2005,
- WO 2013040871 date de dépôt : 14/02/2012,
- WO 2012138120 date de dépôt : 04/04/2012,
- WO 2014053680 date de dépôt : 03/10/2012,
- WO 2014181007 date de dépôt : 27/03/2014,
- WO 2015063215 date de dépôt : 30/10/2014,
- WO 2026079540 date de dépôt : 20/11/2015,
- WO 2018096650 date de dépôt : 25/11/2026,
- FR 3072843 date de dépôt : 19/10/2017,
- WO 2018151594 date de dépôt : 13/02/2018, et
- FR 29449482 A1 date de dépôt : 04/03/2011.

Le brevet WO 2015063215 est le plus proche du concept proposé, sachant qu'il présente des moyens de navigation et d'installation sur site grâce à une structure porteuse constituée notamment de corps de flottabilité disposés aux sommets d'un parallélogramme; néanmoins, il n'est nullement fait référence à une possibilité d'association de plusieurs structures de ce type.

La demande sous le numéro d'enregistrement national INPI référence : FR1873542, en date du 20 décembre 2018, publiée sous le numéro FR 3090753 A1, propose une structure porteuse d'installation in situ et de retrait de modules de captage d'énergie marine.

Cette structure est plus spécifique aux hydroliennes en ce qu'elle garantit plus une perpendicularité par rapport au fond marin qu'une stricte verticalité, elle est caractérisée en en ce qu'elle comprend :
- au moins deux châssis d'hydrolienne comportant un support pivotant selon un axe sensiblement vertical, pour au moins une hydrolienne, solidaire d'un caisson étanche réalisé avantageusement en béton pour ne pas exclure une construction en acier lestée,
- un ensemble de ballastage permettant le contrôle de la flottaison durant l'installation in situ puis le maintien ou le retrait sur le sol dudit châssis d'hydrolienne,
- un ensemble de liaisons entre au moins deux châssis d'hydrolienne comportant pour chacun des deux châssis, une liaison semi-rigide longitudinale et une liaison semi-rigide transversale situées dans le caisson étanche à proximité de l'ensemble de ballastage,
- une configuration desdits châssis en réseau, lesquels châssis étant reliés entre eux par lesdites liaisons et associés à des caissons étanches ballastables internes et périphériques par des liaisons semi-rigides.

WO 2013/040871 A1 décrit une plateforme flottante supportant une éolienne dont le fût est relié à des flotteurs par des poutres constituant un assemblage monobloc.

FR 2 990 477 A1 décrit un ensemble d'éoliennes offshore comprenant chacune des moyens de flottaison ancrés sur le fond marin, au moins deux éoliennes étant reliées par des moyens de liaison consistant en des câbles croisés. Selon ce document, le maintien vertical des mâts des éoliennes n'est pas garanti ; en effet, il n'est assuré que si les câbles sont toujours en tension, ce qui ne peut être le cas d'un ensemble offshore. Ce procédé semble peu compatible avec un fonctionnement en milieu marin soumis à la houle, ainsi qu'aux fortes variations de niveau et de courant dues aux marées. De tels câbles soumis à des tensions intermittentes peuvent donc répercuter de très fortes contraintes aux différents éléments et se rompre à tout moment.

FR 2 990 476 A1 décrit une éolienne sur support flottant comportant un système de maintien de l'éolienne en position privilégiée. Un tel système est désigné par l'Examinateur comme « moyens à cardan ». De tels moyens ne fond pas partie des moyens autorisant une variation ou un ajustement de la distance et/ou la hauteur entre les différents modules.

CN 110 296 049 A montre un ensemble monobloc comportant une éolienne dont le fût est relié à des caissons flottants par des poutres sans aucune articulation au fût.

### Exposé de l'invention

L'invention a donc plus particulièrement pour but de supprimer les inconvénients précédemment invoqués, en cela elle propose une structure porteuse d'installation de modules de captage d'énergie éolienne comprenant:
- au moins un fût supportant le mât du module de captage d'énergie éolienne, dont l'axe principal est sensiblement vertical, il est à la fois un élément constitutif de la structure porteuse et du module de captage. En certains cas, notamment pour l'éolien posé, le fût pourra être fusionné avec la partie inférieure du mat.
- au moins une longrine disposée sur la périphérie dudit fût, en forme de triangle ou de parallélogramme mais non seulement, dans un plan contenant ledit axe principal du fût, et dont au moins un petit côté est associé au fût :
- soit par l'intermédiaire d'un système formant glissière,
- soit par l'intermédiaire d'au moins un parallélogramme articulé,
- soit par l'intermédiaire d'au moins un parallélogramme articulé et d'une glissière
- dans le cas de modules de captage d'énergie éolienne posés, au moins un massif reliant ladite longrine, et
- dans le cas de modules de captage d'énergie éolienne flottants.
- au moins un caisson flottant reliant ladite longrine
- au moins un massif d'ancrage relié par câble d'amarrage à au moins un fût et/ ou au moins un caisson flottant

Selon l'invention, laquelle utilise notamment une liaison par glissière et/ou parallélogramme(s) articulé(s), l'équilibre et la verticalité de chaque module d'éolienne sont assurés par les modules adjacents ou par les modules adjacents et par le lest, dans le cas où un lest est présent. Autrement dit, chaque éolienne peut, pour son maintien vertical, s'appuyer sur la flottaison de la ou des éoliennes adjacentes. De plus, le jeu vertical permet de suivre les mouvements de houle.

Une longrine désigne ici tout assemblage de poutres, longerons ou toute structure allongée, orienté horizontalement, apte à supporter des charges importantes et pouvant être articulé en ses sommets. Aux extrémités de cette dite longrine, le ou les petits cotés essentiellement verticaux relient les modules, directement ou au moyen de dispositifs intermédiaires, aux caissons, massifs, ou pylônes. Certains longerons ou longrines spécifiques ne contribuant qu'au seul positionnement des modules et caissons flottants au sein de la structure pourront ne comporter qu'un point de fixation par extrémité.

Avantageusement, dans le cas des modules de captage d'énergie éolienne posés, onshores ou offshores, le maintien sera assuré par un réseau de longrines reliant les modules par leur fût ou la base de leur mât. La géométrie des longrines étant adaptable au relief du lieu d'implantation. Ces longrines pourront être complétées par des moyens autorisant une légère variation ou ajustement de la distance et/ou de la hauteur entre les différents modules.

La pose des modules de captage étant libérée des contraintes de liaison strictement rigide avec de lourdes fondations, il est envisageable d'intercaler une structure, non représentée, absorbant les vibrations ou les infrasons entre le sol et la base des modules.

Avantageusement, dans le cas des modules de captage d'énergie éolienne flottants, en fonction des besoins et contraintes liés aux différents lieux d'implantation, des éléments tels que des pieux sur forages, des fondations de type caisson à succion, des massifs gravitaires, des points d'appui, des fondations, des ancrages, des caissons flottants intermédiaires et des flotteurs additionnels, seront intégrés de façon à assurer l'équilibre et le maintien de l'ensemble de la structure porteuse. Leur nombre par module de captage sera cependant fortement réduit par rapport à une installation par module indépendant.

D'une façon plus précise, dans le cas des modules de captage d'énergie éolienne flottants, si un maintien vertical rigoureux est recherché, celui-ci sera assuré par l'appui sur une structure porteuse commune, sensiblement horizontale et articulée de manière à s'adapter en présence de houle; lesdites longrines seront complétées par des moyens autorisant des oscillations verticales et/ou des faibles variations de distance entre les différents modules et par des ballasts renforçant la flottabilité et l'horizontalité globale du réseau de modules.

Avantageusement, afin de limiter les contraintes mécaniques dans l'ensemble de la structure, la stabilité verticale des modules de captage d'énergie éolienne flottants pourra pour partie être assurée intrinsèquement et individuellement au moyen du couple de redressement généré par leur lestage et leur réserve de flottabilité propres. Afin d'abaisser le centre de gravité du module de captage d'énergie éolienne et de faciliter les opérations de maintenance, les dispositifs de conversion d'énergie éolienne tels que générateurs électriques, pompes ou compresseurs, habituellement situés au sommet du mat peuvent être installées en partie basse, c'est à dire dans le fut ou à la base du mat.

Selon une particularité de l'invention concernant les modules de captage d'énergie éolienne flottants, des moyens de stabilisation dynamiques tels que gyroscopique ou par transfert de charge non représentés pourront renforcer ledit couple de redressement des modules; l'horizontalité de l'ensemble de la structure pourra être améliorée par asservissement de flotteurs à flottabilité variable (ballasts).

Avantageusement, lesdits moyens d'amortissement de déformation de la structure porteuse et/ou d'oscillation verticale des modules de captage d'énergie éolienne flottants pourront faire l'objet d'une récupération d'énergie dite houlomotrice grâce à l'exploitation de vérins, de freins hydrodynamiques ou dispositifs à transfert de masse non représentés.

Selon une particularité de l'invention, dans le cas où un maintien strictement vertical des modules de captage d'énergie éolienne flottants n'est pas requis, par exemple pour permettre un certain effacement lors de surventes et ainsi limiter les efforts sur la structure porteuse, le module pourra être relié à ladite structure porteuse par des moyens à cardan ou équivalent non représentés, ou par des moyens souples tels que des câbles.

Avantageusement, différentes structures porteuses pourront être assemblées entre elles, par exemple de manière à constituer un cadre périphérique semi-rigide supportant des sous-ensembles ou des modules seuls maintenus par des câbles disposés radialement et/ou orthogonalement; les efforts à l'intérieur de la surface délimitée par le cadre étant pour l'essentiel des forces de traction.

Avantageusement, les lignes d'évacuation d'énergie électrique, non représentées, en provenance des différents modules pourront être mutualisées en une seule, les différents branchements étant réalisés dans la partie aérienne des modules et les câbles électriques seront ainsi portés par les différents éléments de la structure porteuse selon les techniques bien connues et exploitées couramment.

Ainsi la structure porteuse comportant les modules de captage d'énergie éolienne flottants complets, c'est-à-dire l'ensemble constitué par le fût, le mât et l'aérogénérateur, ou ne comportant que les fûts, autorisera le déplacement par remorquage vers le site d'installation, puis dans un second temps, l'amarrage sur le sol sous-marin.

De même la structure porteuse comportant les modules de captage d'énergie éolienne posés offshore autorisera le déplacement par remorquage vers le site d'installation puis son immersion in situ. En cas de positionnement sur un sol sous-marin irrégulier ou non horizontal, la hauteur des fûts peut faire l'objet d'un ajustement préalable par construction ou au moyen d'un pied télescopique non représenté.

Par ailleurs l'ensemble des liaisons de la structure porteuse autorisera durant la phase de déplacement, le remorquage de plusieurs modules de captage d'énergie éolienne en présence de houle modérée.

### Brève description des figures

Un mode de mise en oeuvre du procédé selon l'invention sera décrit ci-après, à titre d'exemple non limitatif, avec référence aux dessins annexés dans lesquels:
[Fig.1] la [Fig.1] représente de manière synthétique une vue en élévation d'un module avec ses principaux éléments périphériques dans sa version posée en Fig.1a et dans sa version flottante en Fig.1b.
[Fig.2] les figures 2a, 2b, 2c, représentent une vue en élévation de modules posés onshore et offshore (sur le principe, ces figures sont transposables à l'implantation d'hydroliennes selon la demande sous le numéro d'enregistrement national INPI référence : FR1873542, en date du 20 décembre 2018, publiée sous le numéro FR3090753 A1).
[Fig.3] les figures 3a, 3b, 3c, représentent une vue en élévation de modules et de caissons flottants offshore associés à différents types de liaison.
[Fig.4] la [Fig.4]. représente une vue schématique d'un regroupement d'une multitude de modules posés onshores ou offshores à quatre longrines par module et formant un réseau orthogonal.
[Fig.5] la [Fig.5] représente une vue schématique d'un regroupement d'une multitude de modules flottants à quatre longrines par module et formant un réseau orthogonal renforcé par des câbles internes.
[Fig.6] la [Fig.6] représente une vue schématique d'un regroupement d'une multitude de modules posés onshores ou offshores, à trois longrines par module et formant un réseau en nid d'abeilles.
[Fig.7] la [Fig.7] représente une vue schématique d'un regroupement en réseau d'une multitude de modules flottants offshores à trois longrines par module, associés chacun à trois caissons flottants en conformité avec les descriptions exposées dans la [Fig.3]
[Fig.8] la [Fig.8] représente une vue schématique d'un regroupement en réseau d'une multitude de modules flottants offshores à trois longrines par module, associés chacun à trois caissons flottants en conformité avec les descriptions exposées dans la [Fig.3] et renforcé par des longerons ou longrines périphériques et des câbles internes.

### Exemples

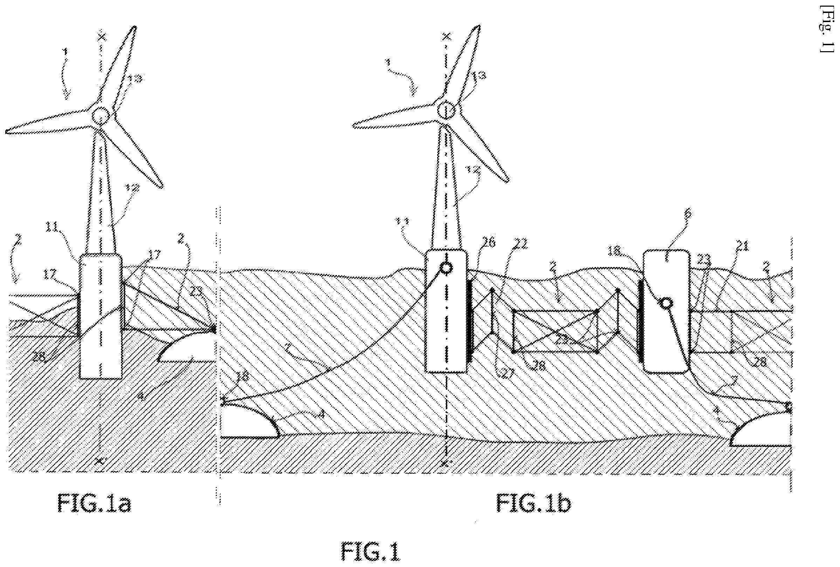

Dans l'exemple représenté sur la [Fig.1], la structure porteuse, décrite ci-après, associe en partie supérieure des futs (11) des modules de captage (1) d'énergie éolienne, disposés selon un axe principal XX' essentiellement vertical ; ils sont constitués d'un aérogénérateur (13) solidaire d'un mât (12) fixé par sa base à un fût (11). La structure porteuse est constituée d'au moins deux longrines (2) disposées en périphérie du fût (11), dans un plan contenant l'axe principal XX' du fût (11), et dont un petit côté (28) est associé soit au fût (11) soit au caisson (6).

Sur la [Fig.1].a ne montrant pas l'invention, l'assemblage est représenté posé inshore ou offshore. Le sol meuble permet en ce cas un enfouissement partiel de la base du fût (11). Il est relié d'une part à un module (1) adjacent non représenté par une longrine (2) rectangulaire et d'autre part à un massif (4) par une longrine (2) triangulaire. Le petit côté (28) des longrines est ici assemblé de manière solidaire (17) au fût (11).et le sommet de la longrine triangulaire qui lui est opposé est fixé au massif (4) par une articulation (23).

Sur la [Fig.1].b, l'assemblage est représenté flottant. Les polygones articulés (22), constitués de parallélogrammes assemblés deux à deux, sont constitués de bras associés par des articulations (23) à un bras central commun (27) essentiellement vertical. Ces polygones sont assemblés de telle sorte qu'ils imposent un maintien parallèle des petits côtés (28) de la longrine (2) avec l'axe du fût (11) et du caisson (6) tout en autorisant entre ceux-ci un léger déplacement vertical et/ou horizontal. Une glissière (26) solidaire du fût (11) ou du caisson (6) permet d'accroitre l'amplitude du susdit déplacement vertical si nécessaire.

Chaque fût (11) ou caisson flottant (6) peut être relié à un massif (4) ou tout autre support disposé sur le sol sous-marin au moyen d'un dispositif d'amarrage (18) et d'un câble (7)

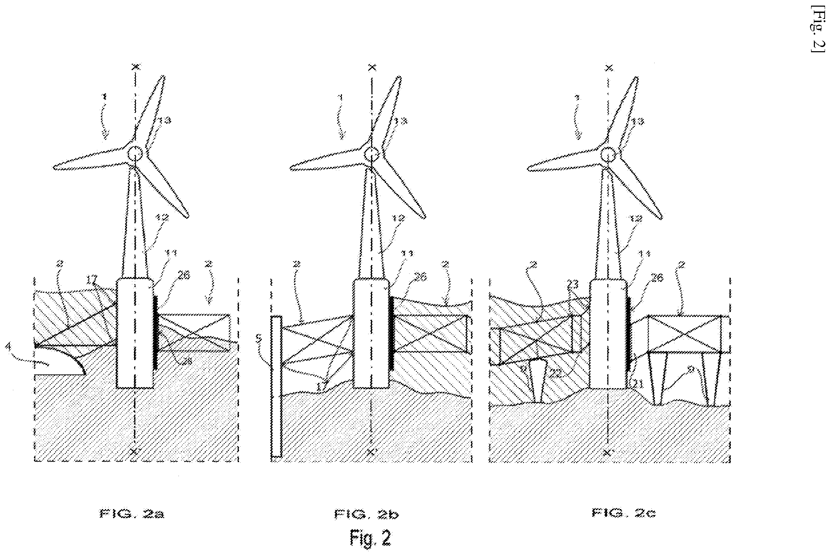

Dans les exemples représentés sur les figures 2a, 2b, 2c, les modules (1) de captage d'énergie éolienne sont posés, onshores et/ou offshores le cas échéant partiellement enfouis selon les figures 2a et 2b, .et posés, par exemple sur un sol rocheux, comme dans le cas de la figure 2c Le module (1) de captage d'énergie éolienne posé peut être associé à un massif (4) ou un pylône (5) au moyen d'une longrine (2), les sommets de celle-ci pouvant être munis d'articulations (23).

Dans l'exemple de la figure 2a, le module (1) de captage d'énergie éolienne est représenté posé sur terrain meuble, indifféremment inshore ou offshore, Un enfouissement partiel dans le sol évite le ripage du module (1) et contribue ainsi au maintien de l'ensemble de la structure dont il est solidaire En périphérie du fût (11), deux longrines (2) maintiennent par leur petit côté (28) le module (1) selon l'axe XX'. Sur la partie gauche de la figure, une longrine (2) de forme triangulaire relie le fût (11) à un massif (4) fixé au sommet opposé du petit côté (28), lui-même fixé au fût d'une manière solidaire (17). Sur la partie droite de la figure 2a une longrine de forme rectangulaire partiellement enfouie est assemblée au fût (11) au moyen d'une glissière (26). La dite glissière autorise un léger déplacement vertical du module notamment en cas de tassement du sol.

Dans l'exemple de la figure 2b, le module (1) de captage d'énergie éolienne est représenté onshore selon la partie gauche de la figure et offshore selon la partie droite. En périphérie du fût (11), deux longrines (2) en forme de parallélogramme maintiennent le module (1) de captage d'énergie éolienne selon l'axe vertical XX'. Les liaisons entre les longrines (2) et le fût (11) sont soit fixes, soit coulissantes au moyen de la glissière (26). Un système de frein ou d'immobilisation non représenté peut compléter l'assemblage du petit côté (28) à la glissière (26).

Dans l'exemple de la figure 2c, le module (1) est représenté posé indifféremment onshore ou offshore sur un sol ferme. Sur la périphérie du fût (11), des longrines (2) maintiennent le module (1) de captage d'énergie éolienne selon un axe vertical XX', les liaisons entre les longrines (2) et le fût (11) sont soit fixes, soit coulissantes au moyen de la glissière (26) associée à un parallélogramme simple (21) ou un double parallélogramme (22). Par ailleurs, en prenant en compte la nature du sol sous-marin, des supports (9) tels que des pieux, des pylônes ou des massifs supportent les longrines (2), ce qui permet le maintien horizontal de l'assiette de la structure et par suite le maintien vertical du module (1) de captage d'énergie éolienne.

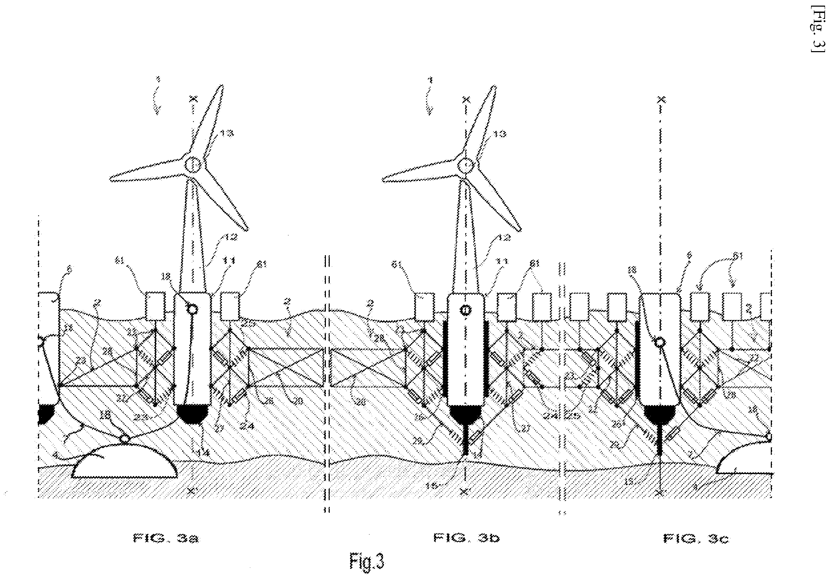

Les figures 3a, 3b, 3c, représentent les principales solutions d'assemblage en mode flottant des modules (1) et caissons (6) avec les longrines (2).

Dans l'exemple de la figure 3a, le module (1) de captage d'énergie éolienne, est constitué d'un fût (11) supportant au voisinage de sa partie supérieure, un mât (12), lequel est solidaire d'un aérogénérateur (13). Sur la périphérie du fût (11), des longrines (2) maintiennent le module (1) de captage d'énergie éolienne selon l'axe XX' essentiellement vertical. Le fût (11) et les longrines (2) sont associés par leur petit côté (28) à un double parallélogramme (22) au moyen d'articulations (23). Sur le côté gauche de la figure 3a, le caisson flottant (6) est relié au fût (11) par une longrine triangulaire (2) et par l'intermédiaire d'un double parallélogramme (22). Sur le côté droit de la figure 3a la longrine est de forme rectangulaire et munie de renforts diagonaux (20). Le fût (11) comprend un lest (14) Les doubles parallélogrammes (22) sont associés à des flotteurs (61). Le caisson (6) et le fût (11) sont reliés à un massif (4) par des amarres (7) au moyen de dispositifs de fixation (18).

Dans l'exemple de la figure 3b, le module (1) de captage d'énergie éolienne, est constitué d'un fût (11) supportant au voisinage de sa partie supérieure, un mât (12), lequel est solidaire d'un aérogénérateur (13). Sur la périphérie du fût (11), des longrines (2) maintiennent le module (1) de captage d'énergie éolienne selon l'axe XX' essentiellement vertical. Le fût (11) et les longrines (2) sont associés par le petit côté (28) à un double parallélogramme (22) au moyen d'articulations (23). Les liaisons entre les longrines (2) et les doubles parallélogrammes (22) sont coulissantes au moyen des glissières (26). Des flotteurs (61) reliés d'une part à la partie supérieure du bras central commun (27), et d'autre part à la partie supérieure des longrines (2) participent au maintien horizontal de l'ensemble de la structure. La longrine sur le côté gauche de la figure 3b comprend des renforts diagonaux (20); la longrine (2) sur le côté droit de la figure comprend des vérins (24) et des ressorts de maintien (25). Le fût (11) comprend un lest (14) prolongé dans sa partie inférieure par un axe (15) qui permet d'associer entre elles les parties inférieures des doubles parallélogrammes grâce aux bras (29) et la partie inférieure du module (1) au moyen d'un coulisseau non représenté

Dans l'exemple de la figure 3c, un caisson flottant (6) est associé, sur la gauche de la figure à une longrine (2) en forme de parallélogramme comprenant des vérins (24) ainsi que des ressorts (25); et sur la droite de la figure à une longrine de forme rectangulaire Ces dites longrines (2) sont chacune associées par au moins l'un de leurs petits cotés (28) à un double parallélogramme (22) comprenant des vérins (24) et des ressorts (25), Côté gauche ce double parallélogramme articulé (22) coulisse le long caisson (6) au moyen de la glissière (26). Le caisson (6) comprend un lest (14) prolongé dans sa partie inférieure par un axe (15) qui, grâce aux bras (29) et à un coulisseau non représenté, permet d'associer les doubles parallélogrammes (22) entre eux ainsi qu'à la partie inférieure du caisson (6)

Des flotteurs (61) reliés d'une part à la partie supérieure du bras central commun (27), et d'autre part à la partie supérieure des longrines (2) participent au maintien horizontal de l'ensemble de la structure. Une amarre (7) relie le caisson (6) à un massif d'ancrage (4) au moyen de dispositifs de fixation (18)

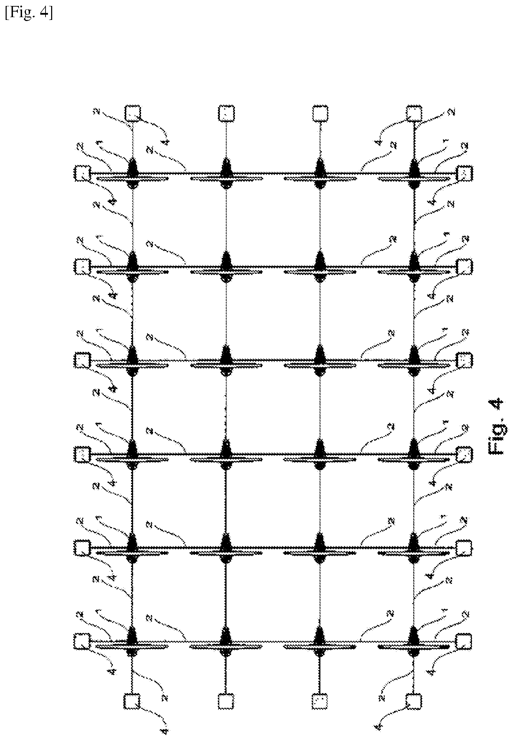

Dans l'exemple représenté sur la [Fig.4], des modules (1) de captage d'énergie éolienne sont posés onshore ou offshore et associés en réseau selon une structure orthogonale conformément aux descriptions précédemment exposées dans les figures 2a, 2b et 2c. Ils sont chacun reliés par quatre branches constituées de longrines (2). Des massifs d'appui (4) sont disposés en périphérie du réseau et reliés audit réseau par des longrines (2).

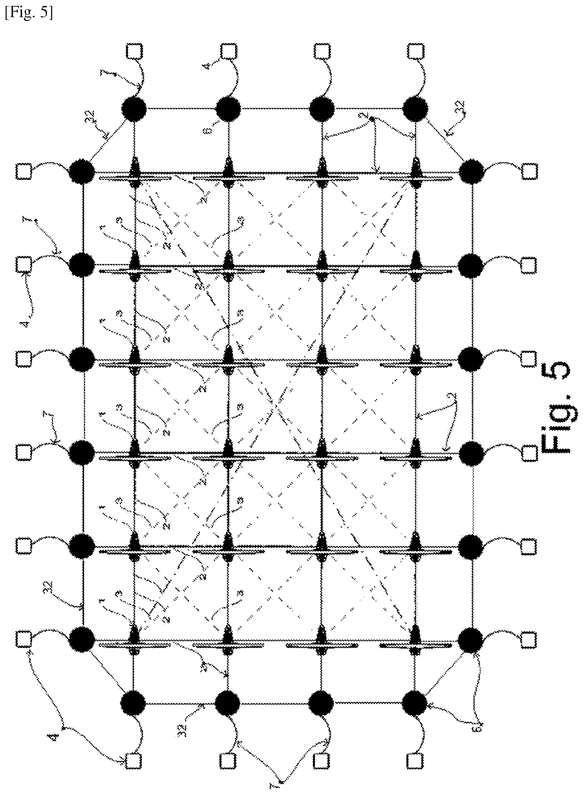

Dans l'exemple représenté sur la [Fig.5], des modules (1) de captage d'énergie éolienne sont flottants offshore et associés en réseau selon une structure orthogonale conformément aux descriptions précédemment exposées dans les figures 3a, 3b et 3c. Ils sont chacun reliés par quatre branches principalement constituées de longrines (2) ainsi que par des câbles de maintien (3). Les modules (1) périphériques sont associés à des caissons flottants (6) qui participent à leur équilibre. Des longrines périphériques (32) relient les caissons entre eux. Par ailleurs l'ensemble du réseau comprend deux câbles de maintien (3) disposés en ses diagonales. Des massifs d'ancrage (4) sont disposés en périphérie du réseau et reliés audit réseau par des câbles d'ancrage (7).

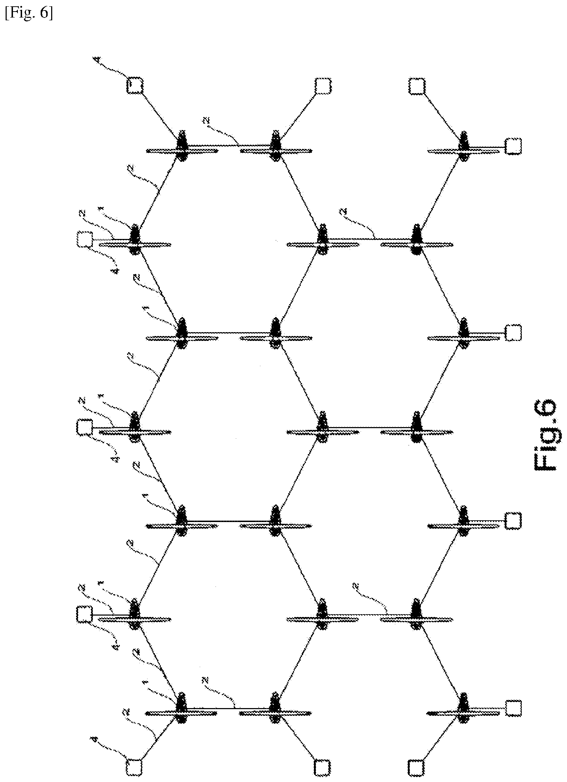

Dans l'exemple représenté sur la [Fig.6], des modules (1) de captage d'énergie éolienne sont posés onshore ou offshore, associés en réseau selon une structure en nid d'abeilles et conformément aux descriptions précédemment exposées dans les figures 2a, 2b et 2c. Ils sont chacun reliés par trois branches principalement constituées de longrines (2). Des massifs d'appui (4) reliés audit réseau par des longrines (2) sont disposés en périphérie.

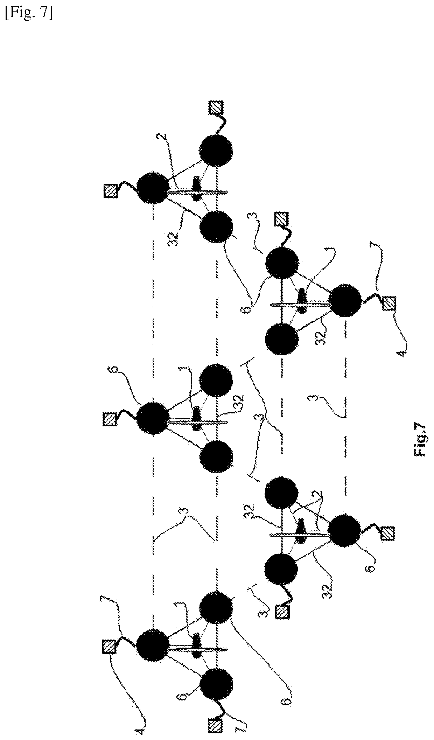

Dans l'exemple représenté sur la [Fig.7], des modules (1) de captage d'énergie éolienne sont flottants offshore et associés à chacune de leur trois branches principalement constituées de longrines (2) à un caisson flottant (6), en conformité avec les descriptions précédemment exposées dans les figures 3a, 3b et 3c. Des longerons (32) ou longrines périphériques relient entre eux les trois caissons (6) disposés autour de chaque module (1). Le réseau est constitué par la réunion des sous-ensembles constitués par les modules (1) reliés à leurs trois caissons respectifs Ces dits sous-ensembles sont reliés entre eux au niveau des caissons (6) par des câbles de maintien (3). Des massifs d'ancrage (4) sont disposés en périphérie du réseau et reliés à des caissons flottants (6) par des câbles d'ancrage (7). Cette disposition a pour but d'espacer les hélices des modules (1) sans nécessiter l'emploi de longerons (32) ou longrines de grande longueur.

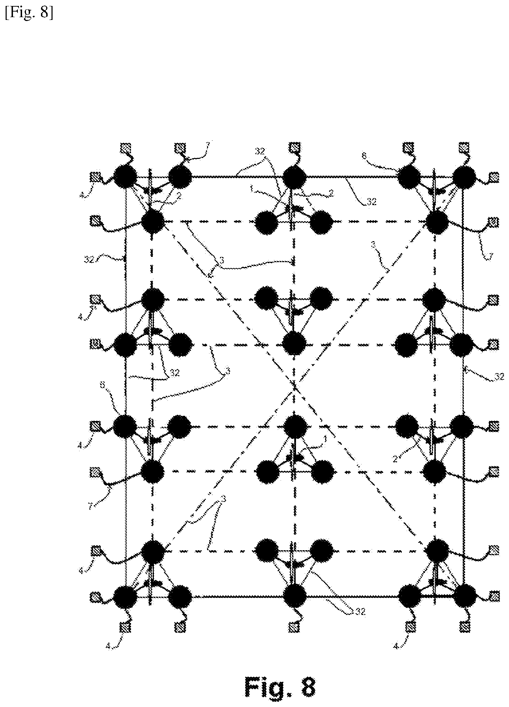

Dans l'exemple représenté sur la [Fig.8], des modules (1) de captage d'énergie éolienne sont flottants offshore et associés à chacune de leur trois branches principalement constituées de longrines (2) à un caisson flottant (6), en conformité avec les descriptions précédemment exposées dans les figures 3a, 3b et 3c. Des longerons ou longrines périphériques (32) relient, en maintenant le positionnement entre eux, les trois caissons (6) disposés autour de chaque module (1). La structure principale est constituée par la réunion des sous-ensembles constitués par les modules (1) reliés à leurs trois caissons respectifs. Les caissons flottants (6) situés en périphérie du réseau sont reliés par des longerons (32) ou longrines (2). En interne à la structure principale, ces dits sous-ensembles sont reliés entre eux au niveau des caissons (6) par des câbles de maintien (3). Par ailleurs la structure principale comprend deux câbles (3) de maintien disposés en ses diagonales. Des massifs d'ancrage (4) sont disposés en périphérie du réseau et reliés à des caissons flottants (6) par des câbles d'ancrage (7). Cette disposition a pour but d'espacer les hélices des modules (1) en limitant l'emploi de longerons ou longrines de grande longueur.

## Revendications

1. Structure porteuse d'installation de modules de captage d'énergie éolienne posés ou flottants comprenant:
• au moins un fût (11) supportant le mât (12) d'un module (1) de captage d'énergie éolienne, dont l'axe principal (XX') est sensiblement vertical,
• au moins une longrine (2) qui est disposée en périphérie dudit fût (11), en une forme choisie parmi les formes de triangle, de parallélogramme et de rectangle, dans un plan contenant ledit axe (XX') principal du fût (11), et dont un petit côté (28) essentiellement vertical est associé au fût (11) par l'intermédiaire de moyens autorisant une variation ou un ajustement de la distance et/ou de la hauteur entre les différents modules, choisi parmi une glissière (26) ou au moins un parallélogramme articulé (21), un ensemble (22) de deux parallélogrammes accolés articulés, et au moins un parallélogramme articulé et une glissière,
• dans le cas d'un module (1) de captage d'énergie éolienne posé, le fût (11) est relié à un massif (4) ou à un pylône (5) par ladite longrine (2),
• au moins un massif (4) ou pylône (5) amarré à la structure dans le cas de modules (1) de captage d'énergie éolienne flottants, et
• au moins un caisson flottant (6) relié au fût (11) par ladite longrine (2) dans le cas de modules (1) de captage d'énergie éolienne flottants.

2. Structure selon la revendication 1, **caractérisée en ce que** le maintien de modules (1) de captage d'énergie éolienne est assuré par un réseau de longrines (2) reliant les modules à leur fût (11).

3. Structure selon la revendication 1, **caractérisée en ce que** dans le cas où les modules (1) de captage d'énergie éolienne sont flottants, des caissons flottants intermédiaires (6) et des ballasts ou des flotteurs (61), sont intégrés en fonction des besoins et contraintes liés aux différents lieux d'implantation de façon à assurer l'équilibre et le maintien horizontal de l'ensemble de la structure porteuse.

4. Structure selon la revendication 1, **caractérisée en ce que** la stabilité verticale des modules (1) de captage d'énergie éolienne flottants est assurée pour tout ou partie, intrinsèquement et individuellement, au moyen du couple de redressement généré par leur lestage et leur réserve de flottabilité propres.

5. Structure selon la revendication 1, **caractérisée en ce que** la stabilité verticale des modules (1) de captage d'énergie éolienne flottants est renforcée et la maintenance desdits modules optimisée en implantant dans le fut ou dans la base du mat les dispositifs électriques et/ou mécaniques de conversion d'énergie éolienne les plus pesants.

6. Structure selon la revendication 1, **caractérisée en ce que** des moyens élastiques de déformation et d'amortissement (24, 25) font partie de la structure porteuse et/ou d'oscillation verticale des modules, ainsi que des moyens de stabilisation gyroscopique ou par transfert de charge renforçant ledit couple de redressement, l'horizontalité de l'ensemble de la structure étant améliorée par asservissement de flotteurs à flottabilité variable ou ballasts.

7. Structure selon la revendication 6, **caractérisée en ce que** lesdits moyens élastiques de déformation et d'amortissement (24, 25) faisant partie de la structure porteuse et/ou d'oscillation verticale des modules permettent la récupération d'énergie dite houlomotrice grâce à l'exploitation de vérins, de freins hydrodynamiques, ou de dispositifs à transfert de masse.

8. Structure selon la revendication 1, **caractérisée en ce que** lesdits modules (1) de captage d'énergie éolienne flottants sont reliés à ladite structure porteuse par des moyens à cardan ou équivalent, ou par des moyens souples, tels que des câbles pour permettre un certain effacement lors de surventes.

9. Structure selon la revendication 1, **caractérisée en ce que** des structures porteuses sont assemblées entre elles de manière à constituer un cadre supportant des sous-ensembles ou des modules seuls maintenus par des câbles disposés radialement et/ou orthogonalement.

## Patentansprüche

1. - Trägerstruktur für die Installation von verlegten oder schwimmenden Windenergieaufnahmemodulen, umfassend
• mindestens einen Schaft (11), der den Mast (12) eines Windenergieaufnahmemoduls (1) trägt, dessen Hauptachse (XX') im Wesentlichen vertikal ist,
• mindestens einen Längsträger (2), der angeordnet ist an dem Umfang des Schafts (11) in einer Form, die ausgewählt ist aus Dreieck-, Parallelogramm- und Rechteckformen, in einer Ebene, die die Hauptachse (XX') des Schafts (11) enthält, und von der eine im Wesentlichen vertikale Schmalseite (28) mit dem Schaft (11) über Einrichtungen verbunden ist, die eine Variation oder Anpassung des Abstands und/oder der Höhe zwischen den verschiedenen Modulen zulassen, ausgewählt aus einer Gleitschiene (26) oder mindestens einem gelenkigen Parallelogramm (21), einer Anordnung (22) von zwei gelenkigen aneinandergefügten Parallelogrammen und mindestens einem gelenkigen Parallelogramm und einer Gleitschiene,
• wobei im Fall eines verlegten Windenergieaufnahmemoduls (1) der Schaft (11) durch den Längsträger (2) mit einem Klotz (4) oder einem Pylon (5) verbunden ist,
• mindestens einen Klotz (4) oder Pylon (5), der im Fall von schwimmenden Windenergieaufnahmemodulen (1) an der Struktur verankert ist, und
• mindestens einen schwimmenden Kasten (6), der im Fall von schwimmenden Windenergieaufnahmemodulen (1) durch den Längsträger (2) mit dem Schaft (11) verbunden ist.

2. - Struktur nach Anspruch 1, **dadurch gekennzeichnet, dass** der Halt von Windenergieaufnahmemodulen (1) durch ein Netz von Längsträgern (2) gewährleistet ist, die die Module mit ihrem Schaft (11) verbinden.

3. - Struktur nach Anspruch 1, **dadurch gekennzeichnet, dass** in dem Fall, in dem die Windenergieaufnahmemodule (1) schwimmend sind, schwimmende Zwischenkästen (6) und Ballasttanks oder Schwimmkörper (61) entsprechend den Bedürfnissen und Beschränkungen in Verbindung mit den verschiedenen Aufstellungsorten integriert sind, um das Gleichgewicht und den horizontalen Halt der gesamten Tragstruktur zu gewährleisten.

4. - Struktur nach Anspruch 1, **dadurch gekennzeichnet, dass** die vertikale Stabilität der schwimmenden Windenergieaufnahmemodule (1) ganz oder teilweise, intrinsisch und individuell mittels des aufrichtenden Drehmoments gewährleistet ist, das durch ihren eigenen Ballast und ihre eigene Auftriebsreserve erzeugt wird.

5. - Struktur nach Anspruch 1, **dadurch gekennzeichnet, dass** die vertikale Stabilität der schwimmenden Windenergieaufnahmemodule (1) verstärkt und der Halt dieser Module optimiert wird, indem die schwersten elektrischen und/oder mechanischen Vorrichtungen zur Umwandlung von Windenergie in den Schaft oder in die Basis des Masts implementiert werden.

6. - Struktur nach Anspruch 1, **dadurch gekennzeichnet, dass** elastische Verformungs- und Dämpfungseinrichtungen (24, 25) Teil der Tragstruktur und/oder der vertikalen Schwingung der Module sind, sowie Einrichtungen zur gyroskopischen Stabilisierung oder durch Lastübertragung, die das Aufrichtungsmoment verstärken, wobei die Horizontalität der gesamten Struktur durch die Steuerung von Schwimmern mit variabler Schwimmfähigkeit oder Ballast verbessert wird.

7. - Struktur nach Anspruch 6, **dadurch gekennzeichnet, dass** die elastischen Verformungs- und Dämpfungseinrichtungen (24, 25), die Teil der Tragstruktur und/oder der vertikalen Schwingung der Module sind, die Rückgewinnung sogenannter Wellenenergie durch die Nutzung von Zylindern, hydrodynamischen Bremsen oder Vorrichtungen mit Massentransfer ermöglichen.

8. - Struktur nach Anspruch 1, **dadurch gekennzeichnet, dass** die schwimmenden Windenergieaufnahmemodule (1) mit der Tragstruktur durch kardanische oder gleichwertige Einrichtungen oder durch flexible Einrichtungen wie beispielsweise Kabel verbunden sind, um eine gewisses Neigung bei übermäßigem Wind zu ermöglichen.

9. - Struktur nach Anspruch 1, **dadurch gekennzeichnet, dass** die Tragstrukturen derart miteinander verbunden sind, um einen Rahmen zu bilden, der Untereinheiten oder einzelne Module trägt, die durch radial und/oder orthogonal angeordnete Kabel gehalten werden.

## Claims

1. - Supporting structure for installing laid or floating wind energy collection modules, comprising:
• at least one base (11) supporting the tower (12) of a wind energy collection module (1), the main axis (XX') of which is substantially vertical,
• at least one stringer (2) which is arranged at the periphery of said base (11), in a shape selected from triangle, parallelogram and rectangle shapes, in a plane containing said main axis (XX') of the base (11), and an essentially vertical short side (28) of which is associated with the base (11) through means allowing variation or adjustment of the distance and/or height between the different modules, selected from a slide (26) or at least one articulated parallelogram (21), an assembly (22) of two adjoining articulated parallelograms, and at least one articulated parallelogram and a slide,
• in the case of a laid wind energy collection module (1), the base (11) is connected to a supporting mass (4) or a mast (5) by said stringer (2),
• at least one supporting mass (4) or mast (5) moored to the structure in the case of floating wind energy collection modules (1), and
• at least one floating caisson (6) connected to the base (11) by said stringer (2) in the case of floating wind energy collection modules (1).

2. - Structure according to claim 1, **characterized in that** holding in place the wind energy collection modules (1) is provided by a network of stringers (2) connecting the modules to their base (11).

3. - Structure according to claim 1, **characterized in that**, in the case of floating wind energy collection modules (1), intermediate floating caissons (6) and ballasts or floats (61) are integrated according to the needs and constraints of the different placement locations, so as to ensure the balance and the horizontal position of the entire supporting structure.

4. - Structure according to claim 1, **characterized in that** the vertical stability of the floating wind energy collection modules (1) is provided in whole or in part, intrinsically and individually, by means of the righting torque generated by their own ballast and reserve buoyancy.

5. - Structure according to claim 1, **characterized in that** the vertical stability of the floating wind energy collection modules (1) is reinforced and the position of said modules is optimized by locating the heaviest electrical and/or mechanical wind energy conversion devices in the base or the tower base.

6. - Structure according to claim 1, **characterized in that** elastic deformation and damping means (24, 25) form part of the supporting and/or vertical oscillation structure of the modules, as well as gyroscopic or load-transfer stabilization means reinforcing said righting torque, the horizontality of the entire structure being improved by automatic control of variable buoyancy floats or ballasts.

7. - Structure according to claim 6, **characterized in that** said elastic deformation and damping means (24, 25) forming part of the supporting and/or vertical oscillation structure of the modules enable so-called wave energy to be recovered by using jacks, hydrodynamic brakes or mass transfer devices.

8. - Structure according to claim 1, **characterized in that** said floating wind energy collection modules (1) are connected to said supporting structure by gimbal means or equivalent, or by flexible means, such as cables, to allow a certain amount of inclination during increases of force wind.

9. - Structure according to claim 1, **characterized in that** supporting structures are assembled together to form a frame supporting sub-assemblies or single modules held together by cables radially and/or orthogonally arranged.
